# EUROPÄISCHE PATENTANMELDUNG

(11) **EP 4 840 582 A1**
(43) Veröffentlichungstag der Anmeldung: **18.11.2026**
(21) Anmeldenummer: 25176923.8
(22) Anmeldetag: 16.05.2025
(51) Int. Cl.: B23Q 16/10, F16D 55/12, F16D 65/18

(54) **PNEUMATISCHE BREMS- UND/ODER KLEMMVORRICHTUNG**

(71) Anmelder: HEMA Maschinen- und Apparateschutz GmbH, 63500 Seligenstadt (DE)
(72) Erfinder: Likus, Edmund, 63500 Seligenstadt (DE)
(74) Vertreter: Herrmann, Daniel

(57) **Zusammenfassung**

Brems- und/oder Klemmvorrichtung zum Bremsen und/oder Klemmen eines zu bremsenden und/oder zu klemmenden Objekts, die Vorrichtung umfassend: ein Gehäuse; mindestens ein elastisches Element; mindestens ein Druckbeutel; mindestens ein Brems- und/oder Klemmelement; mindestens ein elastisches Dichtungselement; durch das Befüllen oder Entleeren des Druckbeutels oder durch Beaufschlagen des Druckbeutels mit dem Fluid unter Überdruck, eine Biegung des mindestens einen elastischen Elements veränderbar ist und dadurch die Vorrichtung zwischen einem geöffneten Zustand, in dem das Objekt von dem Brems- und/oder Klemmelement beabstandet ist, und einem geschlossenen Zustand, in dem das Brems- und/oder Klemmelement eine erste Brems- und/oder Klemmkraft auf das Objekt überträgt, wechselt; wobei ein zwischen dem mindestens einen elastischen Dichtungselement und einer ersten Innenfläche des Gehäuses gebildeter erster Druckraum mit einem zweiten Fluid unter Überdruck beaufschlagbar ist, wobei das mindestens einen elastischen Dichtungselement ausgelegt ist zumindest ein Teil einer zweiten Kraft als Klemm- und/oder Bremskraft zusätzlich zu der ersten Klemm- und/oder Bremskraft über das elastische Element und das Brems- und/oder Klemmelement auf das zu bremsende und/oder zu klemmende Objekt zu übertragen.

## Beschreibung

### TECHNISCHES GEBIET

Die vorliegende Erfindung betrifft eine Brems- und/oder Klemmvorrichtung zum Bremsen und/oder Klemmen eines zu bremsenden und/oder zu klemmenden Objekts, ein System, welches mindestens zwei solcher Vorrichtungen umfasst und die Verwendung einer solchen Vorrichtung und/oder eines solchen Systems zum Bremsen und/oder Klemmen eines zu bremsenden und/oder zu klemmenden Objekts.

### HINTERGRUND

Bei der Herstellung von Werkzeug- oder Maschinenteilen werden Bearbeitungsmaschinen, insbesondere Arbeitsspindeln oder andere Werkzeugmaschinen, verwendet, die mittels an einer Welle befestigten Werkzeugen Material von einem Werkstück bearbeiten, insbesondere um es in die gewünschte Form zu bringen. Beim Handling von Komponenten werden Werkstücke oder Vorrichtungen mittels angetriebener Wellen oder Stangen ebenfalls in eine definierte Lage bewegt. Die Welle kann eine Rotationsachse, Schwenkachse oder Linearachse einer solchen Maschine sein. Weiterhin werden mittels einer Welle rotier- oder schwenkbare Tische und Linearsysteme dazu verwendet, Werkzeuge oder Werkstücke in die geeignete Bearbeitungsposition zu stellen oder Werkstücke mit entsprechenden Drehzahlen oder Vorschüben zu bewegen. Voraussetzung für ein genaues und effizientes Bearbeiten ist dabei unter Anderem eine hohe Drehzahl oder ein hoher Vorschub der Welle. Notfall- bzw. Sicherheitssysteme haben daher die Aufgabe, die Welle bei Störung oder Ausfall der Systeme, wie beispielsweise Stromausfall oder Kabelbruch, zu stoppen bzw. in einer festen Position zu halten und damit zu fixieren.

Gängige Bearbeitungsmaschinen verfügen dabei über elektromagnetische, hydraulische oder pneumatische Klemm- und/oder Bremsvorrichtungen. Solche Vorrichtungen verfügen über einen Reibbelag, der mittels Kraftübertragung reibschlüssig mit der Welle verbunden werden kann. Dadurch wird ein unterschiedlich schnelles Fixieren der Welle ermöglicht.

Bei hydraulischen Klemmvorrichtungen wird eine Kammer mit Hydrauliköl beaufschlagt und klemmt die sich drehende Welle, Scheibe oder Achse fest. Auch passive Hydraulik-Klemmen sind bekannt. Solche hydraulischen Klemmen weisen jedoch lange Reaktionszeiten auf bzw. kurze Reaktionszeiten erfordern dort einen sehr hohen Aufwand. Ferner ist das Hydraulikmaterial, insbesondere Hydraulikventile und Hydraulikrohre, kostspielig und erfordert längere Montagezeiten. Auch ist durch das Hydrauliköl ein Mehraufwand für die Aufrechterhaltung der Sauberkeit im Umfeld einer hydraulischen Klemme zu verzeichnen.

Bei pneumatischen Klemm- und/oder Bremsvorrichtungen werden üblicherweise elastische Komponenten, insbesondere federnde Platten, mit Druckluft beaufschlagt und können einige der genannten Nachteile von hydraulischen Klemmvorrichtungen überwinden.

EP 1 585 616 B1 und EP 1 651 881 B1 beschreiben pneumatische Klemmvorrichtungen mit zwei ringförmigen Federplatten, die in ein Gehäuse der Klemmvorrichtungen eingebracht werden und dort einen Druckraum bilden, der mit Druckluft beaufschlagt oder be- und entlüftet werden kann, um die Biegung der Federplatten zu ändern und dadurch zwischen einem geschlossenen Zustand der Klemmvorrichtungen, in dem ein zu klemmendes Objekt wie eine rotierbare Welle geklemmt wird, und einem offenen Zustand der Klemmvorrichtungen, in dem das Objekt frei ist, zu wechseln. In der Praxis hat sich jedoch gezeigt, dass die damit erreichten Brems- und/oder Klemmkräfte für viele Anwendungen nicht ausreichen.

### KURZBESCHREIBUNG

Es ist daher die Aufgabe der vorliegenden Erfindung eine pneumatische Brems- und/oder Klemmvorrichtung zur Verfügung zu stellen, welche eine erhöhte Brems- und/oder Klemmkraft ermöglichen. Diese Aufgabe wird durch die in Anspruch 1 definierte Brems- und/oder Klemmvorrichtung gelöst.

Die Erfindung löst die beschriebene Aufgabe, weil die erfindungsgemäße Brems- und/oder Klemmvorrichtung wie folgt ausgestaltet ist: Brems- und/oder Klemmvorrichtung zum Bremsen und/oder Klemmen eines zu bremsenden und/oder zu klemmenden Objekts, die Vorrichtung umfassend: ein Gehäuse; mindestens ein elastisches Element; mindestens ein Druckbeutel; mindestens ein Brems- und/oder Klemmelement; wobei der mindestens eine Druckbeutel geeignet ist, mit einem ersten Fluids befüllt und davon entleert zu werden, wobei das mindestens eine elastische Element derart relativ zu den mindestens einen Druckbeutel angeordnet ist, dass durch das Befüllen oder Entleeren des Druckbeutels oder durch Beaufschlagen des Druckbeutels mit dem Fluid unter Überdruck, eine Biegung des mindestens einen elastischen Elements veränderbar ist und dadurch die Vorrichtung zwischen einem geöffneten Zustand, in dem das Objekt von dem Brems- und/oder Klemmelement beabstandet ist, und einem geschlossenen Zustand, in dem das Brems- und/oder Klemmelement eine erste Brems- und/oder Klemmkraft auf das Objekt überträgt, wechselt; wobei die Vorrichtung ferner umfasst: mindestens ein elastisches Dichtungselement; wobei das mindestens eine elastische Dichtungselement derart zu dem Gehäuse und dem mindestens einen elastischen Element angeordnet ist, dass sich zwischen dem mindestens einen elastischen Dichtungselement und einer ersten Innenfläche des Gehäuses ein erster Druckraum bildet, welcher erste Druckraum mit einem zweiten, über das Gehäuse zuführbaren Fluids befüllbar und davon entleerbar ist, wobei das mindestens eine elastische Dichtungselement ausgelegt ist, eine zweite Kraft auf das mindestens eine elastische Element auszuüben, wenn der erste Druckraum mit dem zweiten Fluid unter Überdruck beaufschlagt wird, wobei die Vorrichtung ausgelegt ist, zumindest einen Teil der zweiten Kraft als Klemm- und/oder Bremskraft zusätzlich zu der ersten Klemm- und/oder Bremskraft über das Brems- und/oder Klemmelement auf das zu bremsende und/oder zu klemmende Objekt zu übertragen, wenn sich die Vorrichtung in dem geschlossenen Zustand befindet.

Die Erfinder der vorliegenden Erfindung haben erkannt, dass durch die Verwendung eines elastischen Dichtungselements zur Bildung eines Druckraums zwischen dem elastischen Dichtungselement und einer ersten Innenfläche des Gehäuses, eine zusätzliche, zweite Kraft auf das elastische Element ausgeübt werden kann, wenn der Druckraum mit einem Fluid befüllt wird und mit Überdruck beaufschlagt wird. Da das elastische Element geeignet ist, zumindest einen Teil der zweiten Kraft als Brems- und/oder Klemmraft auf das zu bremsende und/oder zu klemmende Objekt zu übertragen, kann die erste Brems- und/oder Klemmkraft, welche das elastische Element aufgrund seiner elastischen Eigenschaften auf das zu bremsende und/oder zu klemmende Objekt ausübt, verstärkt werden.

In einem weiteren Aspekt der Erfindung ist das mindestens eine elastische Dichtungselement derart ausgestaltet, dass sich das mindestens eine elastische Dichtungselement in einem ersten verformten Zustand befindet, wenn der erste Druckraum mit dem zweiten Fluid unter Überdruck beaufschlagt ist. Hierdurch wird die Übertragung der zweiten Kraft, welche sich aufgrund des Überdrucks in dem zweiten Druckraum ausbildet, auf das elastische Element erleichtert. Die Verwendung eines elastischen Dichtungselements erlaubt außerdem die Verformung dessen, sodass die Brems- und/oder Klemmkraft der Brems- und/oder Klemmvorrichtung auch durch die elastischen Eigenschaften des elastischen Dichtungselements verstärkt werden kann. Das elastische Dichtungselement kann zu diesem Zwecke derart in der Vorrichtung eingebracht sein, dass sich das elastische Dichtungselement in einem ersten verformten (von dem Ruhezustand abweichenden) Zustand befindet, wenn der erste Druckraum mit dem zweiten Fluid unter Überdruck beaufschlagt ist, sodass neben der durch den Überdruck auf das elastische Element wirkenden Kraft auch eine weitere Kraft aufgrund der Verformung des elastischen Dichtungselements auf das elastische Element wirkt.

In einem weiteren Aspekt der Erfindung ist das mindestens eine elastische Element ausgelegt den zumindest einen Teil der zweiten Kraft auf das mindestens eine Brems- und/oder Klemmelement zu übertragen. Hierdurch kann eine Verteilung der Kraft entlang des Brems- und/oder Klemmelements ermöglicht werden, sodass eine effektivere und effizientere Bremsung und/oder Klemmung erfolgen kann. Außerdem kann das Brems- und/oder Klemmelement für die Bremsung und/oder Klemmung optimierte Eigenschaften aufweisen, sodass die Übertragung des zumindest einen Teils der zweiten Kraft auf das Brems- und/oder Klemmelement und mittelbar auf das zu bremsende und/oder zu klemmende Objekt vorteilhaft ist.

In einem weiteren Aspekt der Erfindung ist die zweite Kraft derart ausgerichtet, dass sie einen Übergang der Vorrichtung von dem offenen in den geschlossenen Zustand unterstützt. Die zweite Kraft unterstützt dabei insbesondere die Entleerung des Beutels. Durch diese Ausrichtung der zweiten Kraft, kann die Ansprechgeschwindigkeit der Brems- und/oder Klemmvorrichtung verringert werden. Dies ist möglich, da der Übergang von dem offenen in den geschlossenen Zustand der Brems- und/oder Klemmvorrichtung mittels Entleerung des Druckbeutels geschieht. Hierbei wird die Biegung des elastischen Elements derart verändert, dass die erste Brems- und/oder Klemmkraft auf das zu bremsende und/oder zu klemmende Objekt ausgeübt wird. Durch die Unterstützung dieses Vorgangs mittels der zweiten Kraft kann die Entleerung des Druckbeutels schneller geschehen (da eine weitere Kraft, außer der Federkraft des elastischen Elements auf den Beutel wirkt). Hierdurch kann beispielsweise die Sicherheit von Anlagen, welche das zu bremsende und/oder zu klemmende Objekt umfassen erhöht werden. Beispielsweise bei schnell rotierenden Wellen, kann es zu großen Schäden kommen, wenn im Notfall keine sofortige Bremsung und/oder Klemmung der Welle geschieht. Hierbei ist einerseits die aufbringbare Brems und/oder Klemmkraft relevant, da diese maßgeblich dafür ist, wie schnell, die Welle an Geschwindigkeit verliert, sobald die Brems- und oder Klemmkraft auf diese übertragen wird. Andererseits spielt die Geschwindigkeit, mit der diese Übertragung in Gang gesetzt wird ein große Rolle, da diese entscheidend dafür ist, wann die Bremsung und/oder Klemmung ansetzt, wie viel Zeit also zwischen dem Notfallereignis bzw. -signal und dem Beginn der Brems- und/oder Klemmwirkung vergeht. Die Unterstützung des Übergangs der Brems- und/oder Klemmvorrichtung bei dem Übergang von dem offenen in den geschlossenen Zustand durch die zweite Kraft erlaubt eine Verkürzung dieser Zeit, sodass die Bremsung und/oder Klemmung schneller geschehen kann, sodass etwaige Schäden durch verzögerte Bremsung und/oder Klemmung vermieden und/oder verringert werden können.

In einem weiteren Aspekt der Erfindung liegt das mindestens eine elastische Element vorzugsweise mit einem Ende lösbar auf dem mindestens einen Brems- und/oder Klemmelement auf. Hierdurch wird eine effektive und direkte Übertragung der Brems- und/oder Klemmkraft von dem elastischen Element auf das Brems- und/oder Klemmelement und darüber auf das zu bremsende und/oder zu klemmende Objekt ermöglicht. Des Weiteren wird durch diese Ausgestaltung ein Wechsel des Brems- und/oder Klemmelements (z.B. aufgrund von Verschleiß) erleichtert, da das elastische Element und andere Bauteile hierdurch nicht betroffen sind, sodass keine gesonderte Demontage der Brems- und/oder Klemmvorrichtung von Nöten ist.

In einem weiteren Aspekt der Erfindung weist das mindestens eine Brems- und/oder Klemmelement eine sich von einem ersten Ende in Richtung auf ein zweites vorzugsweise freies Ende erstreckende und eine Mittelachse zumindest teilweise oder vollständig umlaufende Wand auf, wobei die Brems- und/oder Klemmkräfte über die Wand auf das Objekt übertragbar sind. Hierdurch wird eine Bremsung und/oder Klemmung des zu bremsenden und/oder zu klemmenden Objekts aus verschiedenen Richtungen ermöglicht, sodass eine vergrößerte Angriffsfläche für die Brems- und/oder Klemmkraft zur Verfügung steht. Dies erhöht die Effektivität der Brems- und/oder Klemmvorrichtung. Durch die Verwendung eines freien Endes kann der Verschleiß an dem Brems- und/oder Klemmelement verringert werden, da aufgrund der Brems- und/oder Klemmwirkung andere Bereiche des Brems- und/oder Klemmelements hohen Reibungskräften ausgesetzt sind. Bei vollständiger Fixierung des Brems- und/oder Klemmelements kann es bei der Bremsung und/oder Klemmung zu strukturellen Schäden an diesem kommen, sodass ein häufiger Austausch des Teils notwendig wird. Dies führt zu Stillständen von Produktionsanlagen und erhöhtem Wartungsaufwand.

In einem weiteren Aspekt der ist das mindestens eine Brems- und/oder Klemmelement an dessen ersten Ende an dem Gehäuse dergestalt, vorzugsweise lösbar, fixiert, dass das mindestens eine Brems- und/oder Klemmelement in Richtung der Mittelachse und/oder in Richtung einer Rotation um die Mittelachse fixiert ist. Bei der Bremsung und/oder Klemmung kann die Bewegung des zu bremsenden und/oder zu klemmenden Objekts zu Verkippungen, Verschiebungen oder anderen Anordnungsveränderungen von Bauteilen (z.B. des elastischen Elements) kommen. Hierdurch kann die Effektivität der Brems- und/oder Klemmvorrichtung eingeschränkt und/oder gestört werden. Beispielsweise kann die Verschiebung des Brems- und/oder Klemmelements in axialer Richtung bei der Bremsung und/oder Klemmung eines sich axial bewegenden zu bremsenden und/oder zu klemmenden Objekts dazu führen, dass eine axiale Verkippung anderer Bauteile, insbesondere des elastischen Elements entsteht, sodass die Brems- und/oder Klemmkraft der Brems- und/oder Klemmvorrichtung verringert wird. Eine Ähnliche Problematik kann sich durch rotatorische Bewegungen des zu bremsenden und/oder zu klemmenden Objekts ergeben, z.B. während eines Brems- und/oder Klemmprozesses. Durch die Fixierung des Brems- und/oder Klemmelements an einem ersten Ende, sodass eben diese Verschiebungen nicht mehr geschehen können, wird die Brems- und/oder Klemmvorrichtung robuster gegenüber ebensolcher Störungen. Dies erhöht die Betriebssicherheit der Brems- und/oder Klemmvorrichtung. Durch die Fixierung des Brems und/oder Klemmelements an dem ersten Ende kann außerdem eine effektivere Kraftübertragung auf das zu bremsende und/oder zu klemmende Objekt erreicht werden. Des Weiteren wird der Verschleiß an dem elastischen Element verringert, da die Bewegung des Brems- und/oder Klemmelements entlang des elastischen Elements verringert wird.

In einem weiteren Aspekt der Erfindung ist das mindestens eine Brems- und/oder Klemmelement, vorzugsweise dessen Wand, ausgelegt verformt zu werden, wenn das mindestens eine Brems- und/oder Klemmelement eine Klemm- und/oder Bremskraft auf das Objekt überträgt. Bei üblicherweise verwendeten Wellen, Arbeitsspindeln etc. werden, wie schon weiter oben beschrieben, häufig sehr hohe Drehzahlen verwendet. Bei diesen Anwendungen ist daher ein besonderes Bedürfnis, dass eine schnelle und effektive Bremsung und/oder Klemmung stattfindet. Nicht verformbare Brems- und/oder Klemmelemente sind dabei nicht gut geeignet, da die hohen Geschwindigkeiten der zu bremsenden und/oder zu klemmenden Objekte dazu führen können, dass das zu bremsende und/oder zu klemmende Objekt während einer Bremsung und/oder Klemmung nicht ausreichend an dem Brems- und/oder Klemmelement haftet (aufgrund von Reibung), sodass sich das zu bremsende und/oder zu klemmende Objekt an dem Brems- und/oder Klemmelement entlangbewegt. Durch die Verwendung eines verformbaren Brems- und/oder Klemmelements kann die Haftung zwischen diesem und dem zu bremsenden und/oder zu klemmenden Objekt auch bei hohen Geschwindigkeiten dessen aufrecht erhalten werden. So wird eine effektivere Bremsung und/oder Klemmung ermöglicht.

In einem weiteren Aspekt der Erfindung ist das mindestens eine elastische Element eine, vorzugsweise ringförmige, Federplatte. Diese zeichnen sich durch hohe Federkonstanten und damit einhergehende hohe Federkräfte, bei geringer Materialnotwendigkeit und geringen Platzerfordernissen aus. Außerdem weisen diese typischerweise hohe Festigkeiten auf, sodass weitere, auf die Federplatte ausgeübte, Kräfte, außer der Federeigenen Federkraft über die Federplatte auf das zu bremsende und/oder zu klemmende Objekt übertragen werden können. Durch eine ringförmige Ausgestaltung kann das zu bremsende und/oder zu klemmende Objekt (z.B. eine Welle) allseitig angegriffen werden, sodass eine möglichst große Haftreibung und damit besonders effektive Bremsung und/oder Klemmung ermöglicht wird.

In einem weiteren Aspekt der Erfindung umfasst das Gehäuse: einen ersten Gehäuseabschnitt und einen zweiten Gehäuseabschnitt; wobei der erste und zweite Gehäuseabschnitt jeweils eine erste Aussparung aufweisen, wobei der erste und der zweite Gehäuseabschnitt so zueinander angeordnet und miteinander verbunden sind, dass die ersten Aussparungen der ersten und zweiten Gehäuseabschnitte einander zugewandt sind und zusammen einen im Gehäuse einseitig offenen ersten Hohlraum bilden, wobei das mindestens eine elastische Element, der mindestens eine Druckbeutel und das mindestens eine elastische Dichtungselement in dem ersten Hohlraum angeordnet sind, und wobei der erste Gehäuseabschnitt die erste Innenfläche des Gehäuses umfasst. Hierdurch werden die Komponenten der Brems- und/oder Klemmvorrichtung vor äußeren Einflüssen geschützt, während eine direkte Übertragung der Brems- und/oder Klemmkräfte auf das zu bremsende und/oder zu klemmende Objekt ermöglicht wird.

In einem weiteren Aspekt der Erfindung umfasst die Vorrichtung ferner: mindestens ein erstes und ein zweites elastisches Element, jeweils aufweisend eine Federkonstante; wobei das erste und das zweite elastische Element so zu einander angeordnet sind, dass die elastischen Elemente eine elastische Parallelschaltung bilden, sodass eine Gesamtfederkonstante parallel geschalteten elastischen Elemente größer ist, als die Federkonstante des ersten elastischen Elements und größer ist als die Federkonstante des zweiten elastischen Elements, und wobei der mindestens eine Druckbeutel dergestalt zwischen dem ersten und dem zweiten elastischen Element angeordnet ist, dass durch das Befüllen oder Entleeren des Druckbeutels oder durch Beaufschlagen des Druckbeutels mit dem Fluid unter Überdruck, die Biegung des ersten elastischen Elements und eine Biegung des zweiten elastischen Elements veränderbar ist. Hierdurch wird der benötigte Materialaufwand verringert, da lediglich ein Druckbeutel notwendig ist, um die Biegung beider elastischer Elemente zu verändern bei gleichzeitiger Verdopplung der Brems- und/oder Klemmkraft. Außerdem kann die Brems- und/oder Klemmvorrichtung so platzsparend ausgeführt werden, da der Verzicht auf einen weiteren Druckbeutel zu weniger benötigtem Platz führt, sodass die Brems- und/oder Klemmvorrichtung in kompakter Weise und mit verstärkter Brems- und/oder Klemmkraft hergestellt werden kann.

In einem weiteren Aspekt der Erfindung umfasst ein erfindungsgemäßes System: mindestens eine erste erfindungsgemäße und eine zweite erfindungsgemäße Vorrichtungen, wobei die erfindungsgemäßen Vorrichtungen in einer Richtung quer zu einer Wirkungsrichtung der ersten Brems- und/oder Klemmkraft der ersten erfindungsgemäßen Vorrichtung nebeneinander angeordnet sind. Insbesondere können die erste erfindungsgemäße Vorrichtung und die zweite erfindungsgemäße Vorrichtung derart zueinander angeordnet sind, dass beide Vorrichtungen ausgelegt sind, das gleiche zu bremsende und/oder zu klemmende Objekt zu bremsen und/oder zu klemmen. Hierdurch kann die Brems- und/oder Klemmkraft, des Systems vervielfacht werden. Insbesondere kann die Brems- und/oder Klemmkraft, welche auf ein zu bremsendes und/oder zu klemmendes Objekt ausgeübt wird vervielfacht werden, sodass auch schwerere bewegte Massen oder schneller bewegte Massen zuverlässig gebremst und/oder geklemmt werden können.

Der erste oder der zweite Gehäuseabschnitt der ersten erfindungsgemäßen Vorrichtung kann an den ersten oder den zweiten Gehäuseabschnitt der zweiten erfindungsgemäßen Vorrichtung angrenzen. Hierdurch wird eine besonders kompakte Möglichkeit der Verwendung mehrerer erfindungsgemäßer Vorrichtungen ermöglicht, sodass auch bei Anwendungen, welche eine hohe Platzökonomie voraussetzen eine geeignete und zuverlässige Bremsung und/oder Klemmung ermöglicht wird.

In einem weiteren Aspekt der Erfindung können eine Richtung einer Orientierung der ersten erfindungsgemäßen Vorrichtung und eine Richtung einer Orientierung der zweiten erfindungsgemäßen Vorrichtung einander gleichen oder entgegengesetzt zu einander verlaufen. Hierdurch wird sichergestellt, dass das System nicht in seiner Funktionalität eingeschränkt wird, wenn die Orientierungen der Vorrichtungen einander entgegengesetzt sind.

In einem weiteren Aspekt der Erfindung, ist das mindestens eine Brems- und oder Klemmelement der ersten Vorrichtung zugleich das Brems- und/oder Klemmelement der zweiten Vorrichtung ist. Dies ermöglicht einen einfachen Fertigungsprozess und einfache Wartung, da die Menge an Verschleißteilen, welche verbaut und ausgetauscht werden müssen reduziert wird. Außerdem wird die Zuverlässigkeit des System erhöht, da die Bremsung über ein Bauteil, welches von allen erfindungsgemäßen Vorrichtungen in dem System angegriffen wird, die Wechselwirkung zwischen den Vorrichtungen vergrößert, sodass sich die Vorrichtungen gegenseitig besser unterstützen können. Insbesondere wenn das Brems- und/oder Klemmelement an einem Ende fixiert ist, wird weiterer Materialaufwand für weitere Fixierungen vermieden. Außerdem wird die Wartung des Systems vereinfacht, da lediglich eine Fixierung gelöst werden muss, sodass eine weitergehende Dekonstruktion des Systems vermieden werden kann.

In einem weiteren Aspekt der Erfindung ist die erste Vorrichtung entlang der Mittelachse neben der zweiten Vorrichtung angeordnet. Hierdurch kann das zu bremsende und/oder zu klemmende Objekt symmetrisch in das System eingebracht werden, sodass die Brems- und/oder Klemmkräfte ebenfalls symmetrisch auf das zu bremsende und/oder zu klemmende Objekt wirken. Dies erhöht die Verlässlichkeit des Systems, da ein wohldefinierter offener und geschlossener Zustand des Systems entstehen, sodass keine Störungen in dem offenen Zustand entstehen und im geschlossenen Zustand die maximale Kraft auf das zu bremsende und/oder zu klemmende Objekt übertragen werden können.

In einem weiteren Aspekt der Erfindung wird eine erfindungsgemäße Vorrichtung und/oder ein erfindungsgemäßes System zum Bremsen und/oder Klemmen eines zu bremsenden und/oder zu klemmenden Objekts verwendet.

Sofern diese Kurzbeschreibung der Offenbarung Merkmale beschreibt, die nicht in den Patentansprüchen aufgeführt sind, so stellen diese Merkmale keine wesentlichen Merkmale in dem Sinne dar, dass diese Merkmale zwangsläufig in die Patentansprüche aufzunehmen sind, jedoch sind diese Merkmale besonders prominente bevorzugte Realisierungen der beanspruchten Erfindung, können mit jedem der Patentansprüche kombiniert werden und können auch untereinander beliebig kombiniert werden.

### KURZBESCHREIBUNG DER FIGUREN

Im Folgenden wird die Erfindung anhand der Figuren detailliert beschrieben.
- Fig. 1A: zeigt eine schematische Draufsicht auf eine erfindungsgemäße Brems- und/oder Klemmvorrichtung.
- Fig. 1B: zeigt eine schematische Seitendarstellung einer erfindungsgemäßen Brems- und/oder Klemmvorrichtung.
- Fig. 1C: zeigt eine schematische Darstellung eines Schnitts entlang der in Fig. 1A entsprechenden eingezeichneten Schnittlinie.
- Fig. 1D: zeigt eine schematische Darstellung eines Schnitts entlang der in Fig. 1A entsprechenden eingezeichneten Schnittlinie.
- Fig. 1E: zeigt eine schematische Darstellung eines Schnitts entlang der in Fig. 1A entsprechenden eingezeichneten Schnittlinie.
- Fig. 1F: zeigt eine schematische Darstellung eines Schnitts entlang der in Fig. 1A entsprechenden eingezeichneten Schnittlinie.
- Fig. 1G: zeigt eine alternative schematische Darstellung eines Schnitts entlang der in Fig. 1A eingezeichneten Schnittlinie zu Fig. 1C.
- Fig. 2A: zeigt einen schematischen Ausschnitt der Fig. 1C, in welchem die erfindungsgemäße Brems- und/oder Klemmvorrichtung in dem geschlossenen Zustand vorliegt.
- Fig. 2B: zeigt einen schematischen Ausschnitt der Fig. 1C, in welchem die erfindungsgemäße Brems- und/oder Klemmvorrichtung in dem offenen Zustand vorliegt.
- Fig. 3A: zeigt eine schematische Darstellung eines Schnittbilds eines erfindungsgemäßen Systems.
- Fig. 3B: zeigt eine schematische Seitendarstellung eines erfindungsgemäßen Systems.
- Fig. 3C: zeigt eine schematische Darstellung eines Schnittbilds eines erfindungsgemäßen Systems.
- Fig. 4A: zeigt eine schematische Draufsicht eines erfindungsgemäßen elastischen Dichtungselements.
- Fig. 4B: zeigt eine schematische Darstellung eines Schnittbilds eines erfindungsgemäßen elastischen Dichtungselements.
- Fig. 5A: zeigt eine schematische Draufsicht eines erfindungsgemäßen Brems- und/oder Klemmelements.
- Fig. 5B: zeigt eine schematische Seitendarstellung eines erfindungsgemäßen Brems- und/oder Klemmelements.

Objekte die in mehreren Figuren dargestellt sind, tragen dieselben Referenzzeichen.

### DETAILLIERTE BESCHREIBUNG

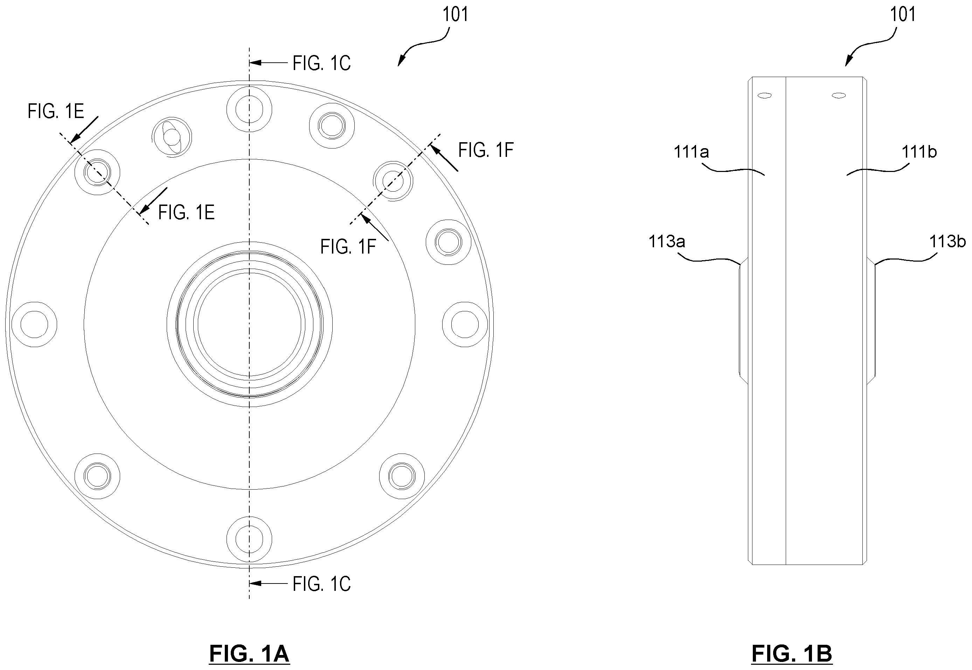

Figs. 1A und 1B zeigen schematische Drauf- und Seitenansichten einer erfindungsgemäßen Brems- und/oder Klemmvorrichtung 101. Die Brems- und/oder Klemmvorrichtung 101 ist ringförmig ausgestaltet und weist eine Aufnahme für das zu bremsende und/oder zu klemmende Objekt auf. Das Gehäuse 111a, 111b weist zwei Stangenabstreifer 113a, 113b auf, welche die Brems- und/oder Klemmvorrichtung 101 vor der Einbringung von Verschmutzungen in das Innere der Brems- und/oder Klemmvorrichtung 101 schützen, wenn ein zu bremsendes und/oder zu klemmendes Objekt in die Aufnahme der Brems- und/oder Klemmvorrichtung 101 eingeführt wird.

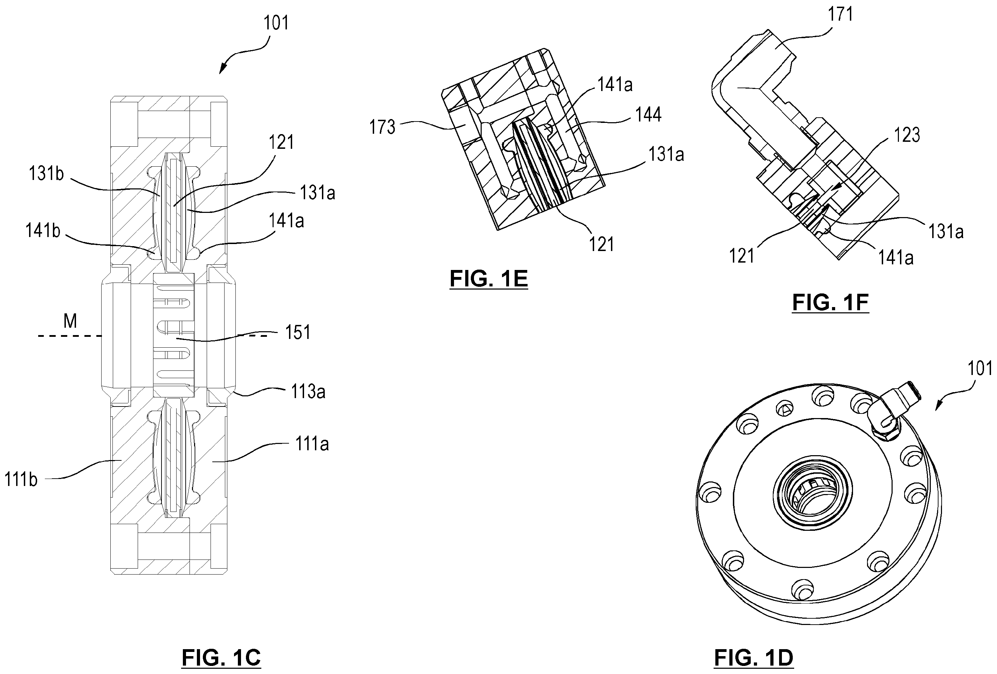

Fig. 1C zeigt einen Schnitt durch die Brems- und/oder Klemmvorrichtung 101 entlang der in Fig. 1A eingezeichneten und entsprechend gekennzeichneten Linie. Darin sind zwei elastische Elemente 131a, 131b gezeigt, welche in der Brems- und/oder Klemmvorrichtung 101 umfasst sind und ebenfalls ringförmig ausgestaltet sind. Die elastischen Elemente 131a, 131b sind dabei als Federplatten ausgestaltet. Die elastischen Elemente 131a, 131b liegen auf einer Seite an dem Gehäuse 111a, 111b an, auf der anderen Seite liegen sie lösbar auf dem Brems- und/oder Klemmelement 151 auf. Das Brems- und/oder Klemmelement ist hierbei eine ringförmige Klemmhülse, über welche eine Spannkraft der elastischen Elemente 131a, 131b auf ein zu bremsendes und/oder zu klemmendes Objekt übertragen werden. Zwischen den elastischen Elementen 131a, 131b ist ein, ebenfalls ringförmiger, Druckbeutel 121 angeordnet. Die Brems- und/oder Klemmvorrichtung 101 umfasst außerdem zwei elastische Dichtungselemente 141a, 141b, welche jeweils zwischen dem Gehäuse 111a, 111b und den elastischen Elementen 131a, 131b angeordnet sind. Fig. 1F zeigt einen Querschnitt der Brems- und/oder Klemmvorrichtung 101 wie in Fig. 1A entsprechend markiert. Einige der zuvor beschriebenen Teile sind ebenfalls zu sehen, wobei der Übersichtlichkeit halber die doppelt vorkommenden Elemente lediglich auf einer Seite markiert sind, etwa das elastische Element 131a und das elastische Dichtungselement 141a. Der Druckbeutel 121 ist mittels einer Verbindung 123 mit einer Zufuhr 171 für ein erstes Fluid verbunden. Hierüber kann der Druckbeutel 121 der Brems- und/oder Klemmvorrichtung 101 mit einem ersten Fluid befüllt oder davon entleert werden. Der Druckbeutel 121 kann auch mit dem ersten Fluid unter Überdruck beaufschlagt werden. Fig. 1E zeigt ebenfalls einen Schnitt, wie er in Fig. 1A eingezeichnet und markiert ist. Dabei sind, analog zu Fig. 1F einige Teile lediglich einseitig markiert. Oberhalb des elastischen Dichtungselements 141a ist eine Verbindung 144 abgebildet, über welche ein zweites Fluid, welches mittels der Fluidzufuhr 173 der Brems- und/oder Klemmvorrichtung 101 zugeführt wird, in den ersten Druckraum 117a, 117b eingeführt werden kann. Fig. 1D zeigt eine perspektivische Darstellung der Brems- und/oder Klemmvorrichtung 101. Erkennbar sind Anschlüsse für die Fluide für den Druckbeutel und den Druckraum, Bohrungen zur Befestigung der Brems- und/oder Klemmvorrichtung 101. In der Aufnahme für das zu bremsende und/oder zu klemmende Objekt ist das Brems- und/oder Klemmelement abgebildet, über welches die Brems- und/oder Klemmkraft auf das zu bremsende und/oder zu klemmende Objekt übertragen wird.

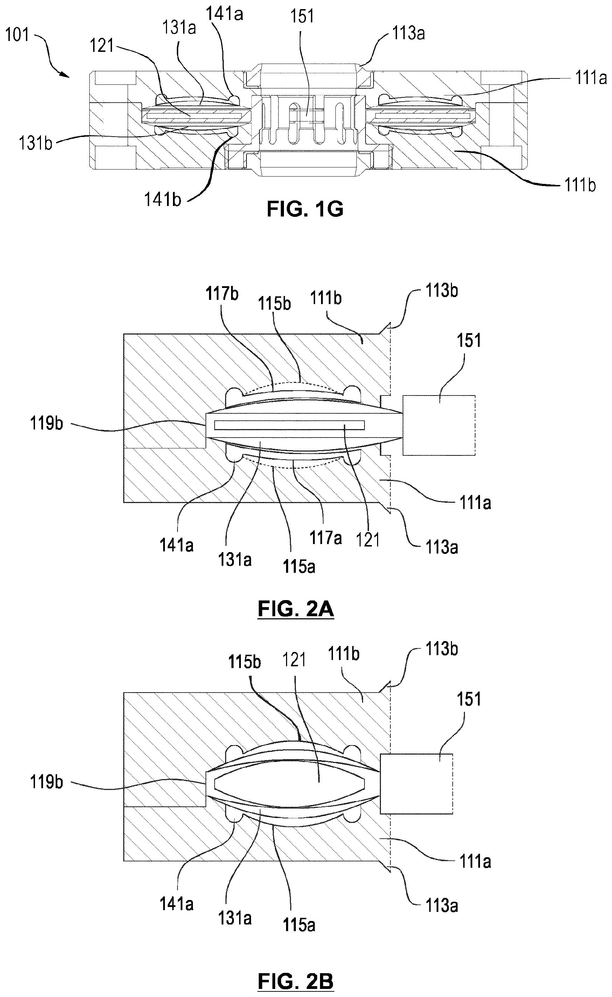

Figs. 2A und 2B zeigen schematische Ausschnitte der Fig. 1C. In Fig. 2A ist die Brems- und/oder Klemmvorrichtung 101 in dem geschlossenen Zustand gezeigt. Der Druckbeutel 121 ist von dem ersten Fluid entleert. Die elastischen Elemente 131a, 131b sind in ihrer Biegung dergestalt verändert, dass das Brems- und/oder Klemmelement 151 an dem zu bremsenden und/oder zu klemmenden Objekt anliegt und die elastischen Elemente 131a, 131b eine erste Brems- und/oder Klemmkraft über das Brems- und/oder Klemmelement 151 auf das zu bremsende und/oder zu klemmende Objekt ausüben. Diese erste Brems- und/oder Klemmkraft resultiert aus der Spannung der elastischen Elemente 131a, 131b, welche nicht in ihrem jeweiligen Ruhezustand vorliegen. Die elastischen Elemente 131a, 131b liegen auf der anderen Seite jeweils an einer zweiten Innenfläche 119b des Gehäuses 111a, 111b an, wodurch die elastischen Elemente 131a, 131b sich von dem Gehäuse 111a, 111b zu dem zu bremsenden und/oder zu klemmenden Objekt hin abdrücken. Zwischen den elastischen Dichtungselementen 141a, 141b und dem Gehäuse 111a, 111b, insbesondere den ersten Innenflächen des Gehäuses 115a, 115b ist der erste Druckraum 117a, 117b zu erkennen. Dieser ist mit dem zweiten Fluid unter Überdruck beaufschlagt. Der Überdruck des zweiten Fluids führt dazu, dass die elastischen Dichtungselemente 141a, 141b jeweils eine zweite Kraft auf die entsprechenden elastischen Elemente 131a, 131b ausüben. Die elastischen Elemente 131a, 131b leiten diese zweite Kraft zumindest Teilweise wiederum über das Brems- und/oder Klemmelement 151 als zweite Brems- und/oder Klemmkraft auf das zu bremsende und/oder zu klemmende Objekt um. Hierdurch wird die Brems- und/oder Klemmkraft der Brems- und/oder Klemmvorrichtung 101 vergrößert.

Fig. 2B zeigt die Brems- und/oder Klemmvorrichtung 101 in dem offenen Zustand. Hierbei ist das Brems- und/oder Klemmelement 151 von dem zu bremsenden und/oder zu klemmenden Objekt beabstandet, sodass dieses ungehindert in der Aufnahme der Brems- und/oder Klemmvorrichtung 101 bewegt werden kann. Der Druckbeutel 121 ist hierbei mit dem ersten Fluid unter Überdruck beaufschlagt. Durch die Anordnung des Druckbeutels zu den elastischen Elementen 131a, 131b ist dieser geeignet die Biegung der elastischen Elemente 131a, 131b zu verändern, sodass die Brems- und/oder Klemmvorrichtung 101 in den offenen Zustand übergeht und gehalten wird. Es ist hierbei anzumerken, dass die abgebildete Ausführungsform, mit je zwei elastischen Elementen 131a, 131b und zwei elastischen Dichtungselementen 141a, 141b keineswegs erforderlich ist. Auch ohne das elastische Element 131a und das elastische Dichtungselement 141a, würde die Brems- und/oder Klemmvorrichtung 101 funktionieren, da sich der Druckbeutel 121 auf der unteren Seite an die erste Innenfläche 115a des Gehäuses 111a, 111b anlegen würde und die Biegung des elastischen Elements 131b entsprechend der Fig. 2B verändern würde. Der erste Druckraum 117a, 117b ist von dem zweiten Fluid entleert, sodass die elastischen Dichtungselemente 141a, 141b an den ersten Innenflächen 115a, 115b des Gehäuses 111a, 111b anliegen.

Die Beaufschlagung des Druckraums 117a, 117b mit dem unter Überdruck stehenden zweiten Fluid führt zu einer Unterstützung des Übergangs der Brems- und/oder Klemmvorrichtung 101 von dem offenen Zustand, so wie in Fig. 2B abgebildet, in den geschlossenen Zustand, so wie in Fig. 2A abgebildet. Der Übergang kann dadurch schneller vollzogen werden, sodass das zu bremsende und/oder zu klemmende Objekt schneller von dem Brems- und/oder Klemmelement 151 angegriffen werden kann und somit schneller gebremst und/oder geklemmt wird. Das elastische Dichtungselemente 141a, 141b ist dabei derart ausgestaltet, dass es verformbar ist, so wie in den Figs. 2A und 2B dargestellt. Das elastische Dichtungselement 141a, 141b kann dabei in dem geschlossenen Zustand der Brems- und/oder Klemmvorrichtung 101 in einem ersten verformten Zustand vorliegen, sodass eine eigene Rückstellkraft des elastischen Dichtungselements die Bremsung und/oder Klemmung des zu bremsenden und/oder zu klemmenden Objekts unterstützt, insbesondere wenn der Druckraum 117a, 117b mit dem zweiten Fluid unter Überdruck beaufschlagt ist.

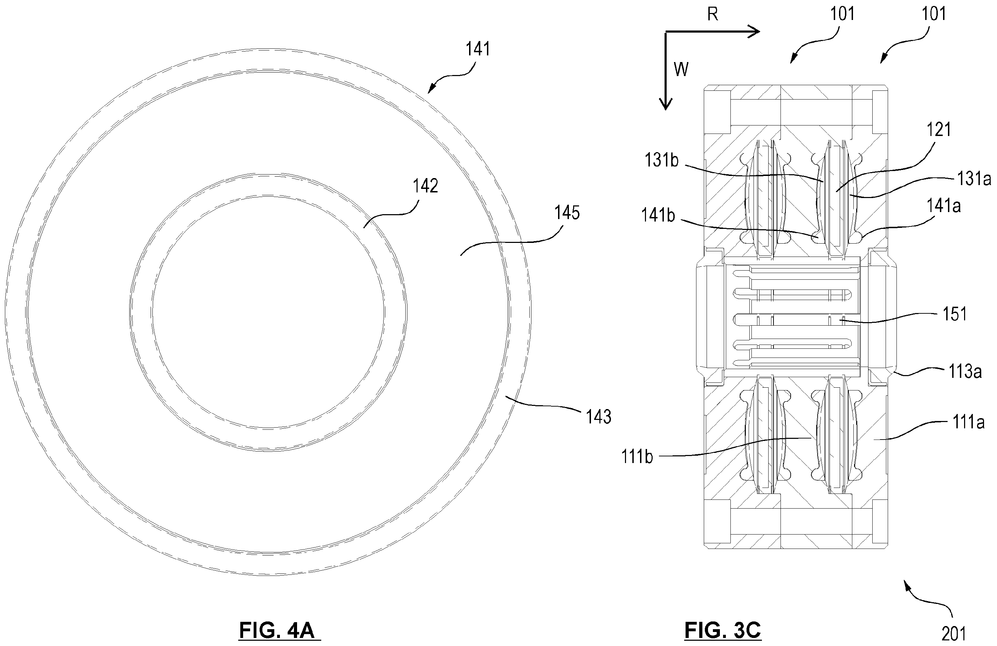

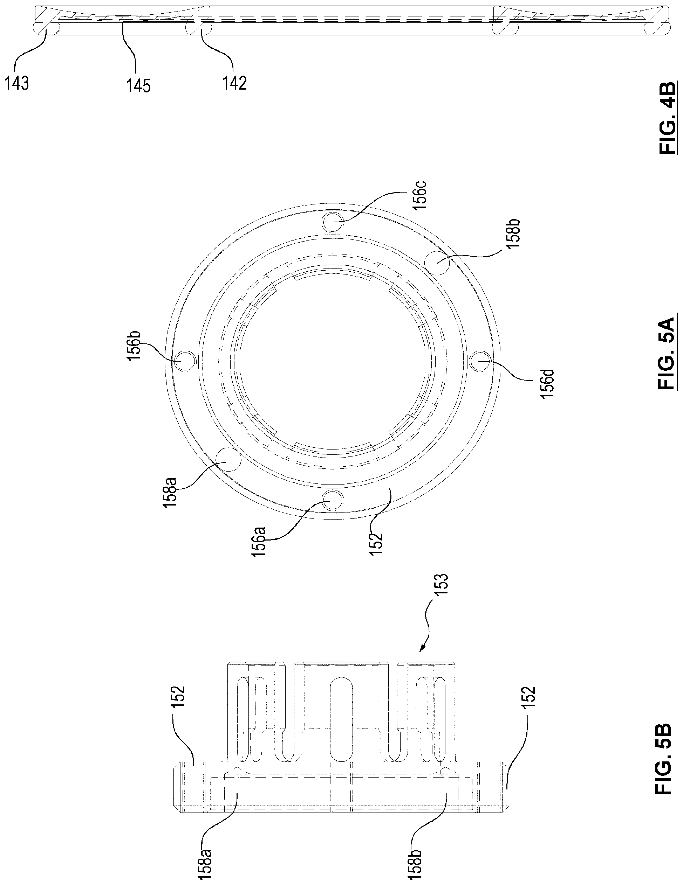

Das elastische Dichtungselement 141a, 141b ist in Figs. 4A und 4B dargestellt. Dargestellt ist ein ringförmiges Elastomerelement. Das elastische Dichtungselement 141 umfasst dabei zwei verdickte Bereiche 142, 143, welche auch in den Figs. 1C, 2A und 2B erkennbar sind. Die verdickten Bereich 142, 143 verlaufen entlang der inneren und des äußeren ringförmigen Ränder des elastischen Dichtungselements 141. Die verdickten Bereiche 142, 143 dienen der zuverlässigen Abdichtung des Druckraums, welcher mit dem zweiten Fluid befüllt werden kann. Zwischen den verdickten Bereichen 142, 143 verläuft ein dünnerer Bereich 145, welcher den Druckraum von einer Seite begrenzt und auf der dem Druckraum abgewandten Seite auf dem elastischen Element 131a, 131b aufliegt.

Das Brems- und/oder Klemmelement 151 der der Brems- und/oder Klemmvorrichtung 101 ist als Klemmhülse ausgeführt, welche eine ringförmige Wand umfasst. Die Wand des Brems- und/oder Klemmelements 151 umläuft dabei eine Mittelachse M des Brems- und/oder Klemmelements 151. Diese Mittelachse M kann mit der Mittelachse der der Brems- und/oder Klemmvorrichtung 101 übereinstimmen, so wie in den Figuren gezeigt. Wie insbesondere in Fig. 1C dargestellt verfügt die Wand des Brems- und/oder Klemmelement über zwei Enden 152, 153 in axialer Richtung , wobei in Fig. 1C beide Enden 152, 153 frei, also nicht fixiert sind. Die von den elastischen Elementen 131a, 131b ausgeübte Brems- und/oder Klemmkraft (sowohl die erste, als auch die zweite) werden von diesen auf das Brems- und/oder Klemmelement, insbesondere auf dessen Wand übertragen. Das Brems- und/oder Klemmelement, insbesondere dessen Wand übertragt dann die Brems- und/oder Klemmkräfte auf das zu bremsende und/oder zu klemmende Objekt.

Das Brems- und/oder Klemmelement 151 kann aus einem geeigneten Material bestehen, insbesondere eine geeignete Oberflächenstruktur aufweisen, welche/s einen hohen Haftreibungskoeffizienten zwischen der Wand des Brems- und/oder Klemmelements 151 und dem zu bremsenden und/oder zu klemmenden Objekt gewährleistet. Hierdurch wird die Effektivität der der Brems- und/oder Klemmvorrichtung 101 gesteigert.

Fig. 1G zeigt eine alternative Darstellung des Schnitts der erfindungsgemäßen Brems- und/oder Klemmvorrichtung 101 entlang der selben Linie wie Fig. 1C. Hierbei ist das Brems- und/oder Klemmelement 151 an dem ersten Ende 152 an dem Gehäuse 111a, 111b lösbar fixiert. Das Brems- und/oder Klemmelement 151 ist hierdurch in einer axialen Richtung, entlang der Mittelachse M fixiert. Das Brems- und/oder Klemmelement 151 in dieser Ausführung ist in den Figs. 5A und 5B dargestellt. Das Brems- und/oder Klemmelement verfügt hierbei über Aussparungen 156a-d und 158a, b, welche auf einem verbreiterten Rand des Brems- und/oder Klemmelements 151 an dem ersten Ende 152 angeordnet sind. Der verbreiterte Rand des Brems- und/oder Klemmelements 151 kann in dem Gehäuse 111a, 111b derart angeordnet werden, dass eine axiale Bewegung des ersten Endes 151 des Brems- und/oder Klemmelements entlang der Mittelachse M nicht möglich ist. Die Aussparungen 156a-d, 158a, b erlauben die lösbare Fixierung des Brems- und/oder Klemmelements dergestalt, dass eine Rotationsbewegung des ersten Endes des Brems- und/oder Klemmelements 151 in Richtung um die Mittelachse M ebenfalls nicht mehr möglich ist. Somit kann das Brems- und/oder Klemmelement 151 lösbar an dem Gehäuse 111a, 111b der Brems- und/oder Klemmvorrichtung 101 fixiert werden. Hierdurch kann eine Verkippung der elastischen Elemente 131a, 131b, welche lösbar auf dem Brems- und/oder Klemmelement 151 aufliegen vermieden oder verringert werden, insbesondere wenn das zu bremsende und/oder zu klemmende Objekt eine axiale Bewegung innerhalb der Aufnahme der Brems- und/oder Klemmvorrichtung 101 ausführt zu dem Zeitpunkt in dem es gebremst und/oder geklemmt werden soll.

Das Brems- und/oder Klemmelement 151 ist, wie in den Figs 1C, 1G, 3A, 3C, 5A, 5B dargestellt, ausgelegt verformt zu werden. Insbesondere die Wand des Brems- und/oder Klemmelements 151 ist so ausgestaltet, dass eine Verformung ermöglicht wird, wenn das Brems- und/oder Klemmelement 151 eine Brems- und/oder Klemmkraft auf das zu bremsende und/oder zu klemmende Objekt überträgt. Dies kann dadurch geschehen, dass bei der Bremsung und/oder Klemmung des zu bremsenden und/oder zu klemmenden Objekts in dem geschlossenen Zustand der Brems- und/oder Klemmvorrichtung 101 eine Reibungskraft zwischen dem Brems- und/oder Klemmelement 151 und dem zu bremsenden und/oder zu klemmenden Objekt entsteht. Das Brems- und/oder Klemmelement ist dabei so ausgestaltet, dass eine Verformung sowohl in der axialen Richtung, in welcher sich das zweite, freie Ende 153 des Brems- und/oder Klemmelements 151 auf das erste (fixierte) Ende 152 des Brems- und/oder Klemmelements 151 zu bewegt oder davon entfernt, sodass sich die Ausdehnung des Brems- und/oder Klemmelements 151 zwischen den beiden Enden verändert, als auch in einer Rotationsrichtung um die Mittelachse M herum, in welcher das zweite freie Ende 153 um einen größeren/kleineren Winkel um die Mittelachse M um die Mittelachse M rotiert als das erste (fixierte) Ende 153, ermöglicht wird. Die abgebildete Ausgestaltung weist verschiedene Bereiche des Brems- und/oder Klemmelements auf, in welchen kein Material vorhanden ist. Die Wand des Brems- und/oder Klemmelements weißt somit Aussparungen auf, welche eine Verformung begünstigen. Dies limitiert die Erfindung jedoch nicht. Auch andere Ausführungen sind möglich, z.B. Variationen in der Materialstärke, unterschiedliche Materialien etc.

Wie in den Figs. 1C, 1G, 2A, 2B deutlich wird, umfasst das Gehäuse der Brems- und/oder Klemmvorrichtung 101 einen ersten Gehäuseabschnitt 111a und einen zweiten Gehäuseabschnitt 111b, die jeweils eine Aussparung aufweisen. Die Gehäuseabschnitte sind einander dergestalt zugewandt, dass sich in dem Gehäuse ein erster einseitig offener Hohlraum, in welchem die weiteren Bauteile (elastische Elemente 131a, 131b, elastische Dichtungelemente 141a, 141b, Druckbeutel 121) angeordnet sind. Der erste Gehäuseabschnitt 111a umfasst dabei die erste Innenfläche 115a, welche eine Begrenzung des ersten Druckraums 117a bildet. Das elastische Dichtungselement 141a ist angrenzend an die erste Innenfläche 115a des ersten Gehäuseabschnitts 111a und angrenzend an das erste elastische Element 131a angeordnet und liegt zwischen der ersten Innenfläche 115a und dem elastischen Element 131a. Der Druckbeutel 121 ist angrenzend an das elastische Element 131a angeordnet, sodass letzteres zwischen dem Druckbeutel 121 und dem elastischen Dichtungselement 141a angeordnet ist.

Die zwei elastischen Elemente 131a, 131b (Federplatten) weisen jeweils eine Federkonstante auf und sind derart in dem Gehäuse angeordnet, dass sowohl die Federkraft des elastischen Elements 131a und die des elastischen Elements 131b aufgewendet werden muss, um das Brems- und/oder Klemmelement zum äußeren Rand des Gehäuses hinzubewegen. Die elastischen Elemente 131a, 131b bilden daher eine elastische Parallelschaltung, deren Gesamtfederkonstante höher ist als die der einzelnen elastischen Elemente 131a, 131b. Wie schon weiter oben beschrieben ist der Druckbeutel 121 dergestalt in der Brems- und/oder Klemmvorrichtung 101 angeordnet, dass dieser geeignet ist die Biegung beider elastischer Elemente 131a, 131b zu verändern, wenn dieser mit dem ersten Fluid unter Überdruck beaufschlagt wird.

Der einseitig offene Hohlraum, welcher durch die beiden Gehäuseabschnitte 111a, 111b gebildet wird, wird an der offenen Seite durch das Brems- und/oder Klemmelement 151 begrenzt, sodass die in dem ersten einseitig offenen Hohlraum angeordneten elastischen Elemente 131a, 131b direkt auf dem Brems- und/oder Klemmelement aufliegen können, sodass die Brems- und/oder Klemmkraft ohne Weiteres auf das zu bremsende und/oder zu klemmende Objekt übertragen werden kann.

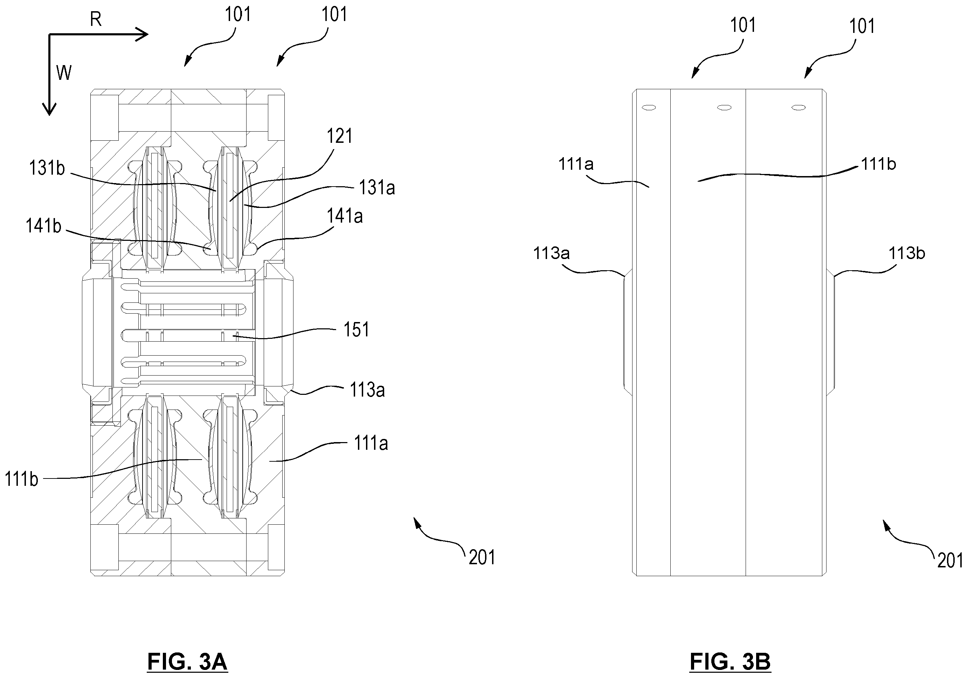

Die Figs. 3A-C zeigen ein erfindungsgemäßes System 201 mehrerer (zweier, dadurch jedoch nicht auf lediglich zwei limitiert) erfindungsgemäßer Brems- und/oder Klemmvorrichtungen 101. Das System 201 umfasst dabei eine erste Brems- und/oder Klemmvorrichtung 101 und eine zweite Brems- und/oder Klemmvorrichtung 101. Die Wirkungsrichtung W der beiden Brems- und/oder Klemmvorrichtungen 101 ist auf das Innere der ringförmigen Ausgestaltung gerichtet, sodass die zwei Brems- und/oder Klemmvorrichtungen 101 in einer Richtung R quer (in diesem Beispiel im Wesentlichen orthogonal) zu einer solchen Wirkungsrichtung W nebeneinander angeordnet sind. Das Gehäuse der ersten Brems- und/oder Klemmvorrichtung 101 besteht wiederum aus zwei Gehäuseabschnitten 111a, 111b. Die zweite Brems- und/oder Klemmvorrichtung 101 umfasst ebenfalls zwei Gehäuseabschnitte. Der erste/oder zweite Gehäuseabschnitt der zweiten Brems- und/oder Klemmvorrichtung 101 wird ist in dem gleichen Bauteil umfasst, welches auch den zweiten Gehäuseabschnitt 111b der ersten Vorrichtung umfasst. Die Gehäuseabschnitte der ersten Brems- und/oder Klemmvorrichtung 101 sind ebenfalls in einer Richtung R quer zu der Wirkungsrichtung W der ersten Brems- und/oder Klemmkraft der ersten Brems- und/oder Klemmvorrichtung 101 neben den Gehäuseabschnitten der zweiten Brems- und/oder Klemmvorrichtung 101 angeordnet. Die beiden Brems- und/oder Klemmvorrichtungen 101 sind außerdem angrenzend aneinander angeordnet, wobei der erste Gehäuseabschnitt der zweiten Brems- und/oder Klemmvorrichtung 101 angrenzend an den zweiten Gehäuseabschnitt der zweiten Brems- und/oder Klemmvorrichtung 101 angeordnet ist, sodass die Orientierungen der Brems- und/oder Klemmvorrichtung 101 gleich gerichtet sind. Alle anderen Kombinationen (entgegengesetzt zu dem vorher genannten; erster Gehäuseabschnitt der ersten Brems- und/oder Klemmvorrichtung 101 angrenzend an den ersten Gehäuseabschnitt der zweiten Brems- und/oder Klemmvorrichtung 101, oder gleiches mit den zweiten Gehäuseabschnitten der Brems- und/oder Klemmvorrichtung 101, wobei die Orientierungen der Brems- und/oder Klemmvorrichtung 101 entgegengerichtet sind) ist ebenfalls möglich. Die Verwendung eines Gehäuseteils zur Vereinigung zweier Gehäuseabschnitte erlaubt eine materialschonende Herstellung des erfindungsgemäßen Systems 201. Die zwei Brems- und/oder Klemmvorrichtungen 101 können jedoch auch separat von einander gefertigt sein und als einzelne Brems- und/oder Klemmvorrichtungen 101 als System 201 verwendet werden. Insbesondere, wenn eine räumliche Trennung geboten ist, die Brems- und/oder Klemmvorrichtungen 101 des Systems 201 also nicht angrenzend aneinander angeordnet werden sollen, damit die Brems- und/oder Klemmkraft an verschiedenen Stellen des zu bremsenden und/oder zu klemmenden Objekts oder zur Bremsung verschiedener zu bremsender und/oder zu klemmender Objekte verwendet werden können, ist eine Ausgestaltung in Form mehrerer einzelner Brems- und/oder Klemmvorrichtungen 101 von Vorteil.

In Fig. 3A ist das Brems- und/oder Klemmelement 151 an dem ersten Ende 152 mit dem Gehäuse verbunden, in Fig. 3C sind beide Enden des Brems- und/oder Klemmelements frei. In beiden Fällen teilen sich die erste und die zweite Brems- und/oder Klemmvorrichtung 101 des Systems 201 ein Brems- und/oder Klemmelement. Hierdurch wird die Menge an Kleinteilen verringert. Außerdem wird eine höhere Auflagefläche des Brems- und/oder Klemmelements auf dem zu bremsenden und/oder zu klemmenden Objekt ermöglicht. Dies ermöglicht eine effizientere Bremsung und/oder Klemmung, insbesondere dann, wenn das Brems- und/oder Klemmelement die oben beschriebenen Material und/oder Oberflächeneigenschaften aufweist.

Das System 201 der Figs. 3A-C ist derart ausgestaltet, dass die erste und die zweite Brems- und/oder Klemmvorrichtung 101 ausgelegt sind, das selbe zu bremsende und/oder zu klemmende Objekt zu bremsen und/oder zu klemmen, wenn das zu bremsende und/oder zu klemmende Objekt in die gemeinsame Aufnahme des Systems 201 aufgenommen wird. Hierdurch kann die Brems- und/oder Klemmkraft des Systems 201 verdoppelt werden.

Die erste Brems- und/oder Klemmvorrichtung 101 des in den Figs. 3A-C abgebildeten Systems 201 ist außerdem entlang der Mittelachse M der zweiten Brems- und/oder Klemmvorrichtung 101 des Systems 201 neben der ersten Brems- und/oder Klemmvorrichtung 101 angeordnet. Dies begünstigt die Verwendung des Systems 201 zu Bremsung und/oder Klemmung des selben zu bremsenden und/oder zu klemmenden Objekts.

Die vorliegende Erfindung kann (auch) durch einen oder mehrere der folgenden Aspekte beschrieben werden:

### ASPEKTE

1. Brems- und/oder Klemmvorrichtung zum Bremsen und/oder Klemmen eines zu bremsenden und/oder zu klemmenden Objekts, die Vorrichtung umfassend:
   ein Gehäuse;
   mindestens ein elastisches Element;
   mindestens ein Druckbeutel;
   mindestens ein Brems- und/oder Klemmelement;
   wobei der mindestens eine Druckbeutel geeignet ist, mit einem ersten Fluid befüllt und davon entleert zu werden,
   wobei das mindestens eine elastische Element derart relativ zu den mindestens einen Druckbeutel angeordnet ist, dass durch das Befüllen oder Entleeren des Druckbeutels oder durch Beaufschlagen des Druckbeutels mit dem Fluid unter Überdruck, eine Biegung des mindestens einen elastischen Elements veränderbar ist und dadurch die Vorrichtung zwischen einem geöffneten Zustand, in dem das Objekt von dem Brems- und/oder Klemmelement beabstandet ist, und einem geschlossenen Zustand, in dem das Brems- und/oder Klemmelement eine erste Brems- und/oder Klemmkraft auf das Objekt überträgt, wechselt;
   **dadurch gekennzeichnet, dass** die Vorrichtung ferner umfasst:
      mindestens ein elastisches Dichtungselement;
      wobei das mindestens eine elastische Dichtungselement derart zu dem Gehäuse und dem mindestens einen elastischen Element angeordnet ist, dass sich zwischen dem mindestens einen elastischen Dichtungselement und einer ersten Innenfläche des Gehäuses ein erster Druckraum bildet, welcher erste Druckraum mit einem zweiten, über das Gehäuse zuführbaren Fluid befüllbar und davon entleerbar ist,
      wobei das mindestens eine elastische Dichtungselement ausgelegt ist, eine zweite Kraft auf das mindestens eine elastische Element auszuüben, wenn der erste Druckraum mit dem zweiten Fluid unter Überdruck beaufschlagt wird,
      wobei die Vorrichtung ausgelegt ist, zumindest einen Teil der zweiten Kraft als Klemm- und/oder Bremskraft zusätzlich zu der ersten Klemm- und/oder Bremskraft über das Brems- und/oder Klemmelement auf das zu bremsende und/oder zu klemmende Objekt zu übertragen, wenn sich die Vorrichtung in dem geschlossenen Zustand befindet.
2. Vorrichtung nach Aspekt 1, wobei das mindestens eine elastische Dichtungselement derart ausgestaltet ist, dass sich das mindestens eine elastische Dichtungselement in einem ersten verformten Zustand befindet, wenn der erste Druckraum mit dem zweiten Fluid unter Überdruck beaufschlagt ist.
3. Vorrichtung nach einem der voranstehenden Aspekte, wobei das mindestens eine elastische Element ausgelegt ist, den zumindest einen Teil der zweiten Kraft auf das mindestens eine Brems- und/oder Klemmelement zu übertragen.
4. Vorrichtung nach einem der voranstehenden Aspekte, wobei die zweite Kraft derart ausgerichtet ist, dass sie einen Übergang der Vorrichtung von dem offenen in den geschlossenen Zustand, insbesondere durch Unterstützung der Entleerung des Druckbeutels, unterstützt.
5. Vorrichtung nach einem der voranstehenden Aspekte, wobei das mindestens eine elastische Element vorzugsweise mit einem Ende lösbar auf dem mindestens einen Brems- und/oder Klemmelement aufliegt.
6. Vorrichtung nach einem der voranstehenden Aspekte, wobei das mindestens eine Brems- und/oder Klemmelement eine sich von einem ersten Ende in Richtung auf ein zweites vorzugsweise freies Ende erstreckende und eine Mittelachse zumindest teilweise oder vollständig umlaufende Wand aufweist, wobei die Brems- und/oder Klemmkräfte über die Wand auf das Objekt übertragbar sind.
7. Vorrichtung nach einem der voranstehenden Aspekte, wobei das mindestens eine Brems- und/oder Klemmelement an dessen ersten Ende an dem Gehäuse dergestalt, vorzugsweise lösbar, fixiert ist, dass das mindestens eine Brems- und/oder Klemmelement in Richtung der Mittelachse und/oder in Richtung einer Rotation um die Mittelachse fixiert ist.
8. Vorrichtung nach einem der voranstehenden Aspekte, wobei das mindestens eine Brems- und/oder Klemmelement, vorzugsweise dessen Wand, ausgelegt ist verformt zu werden, wenn das mindestens eine Brems- und/oder Klemmelement eine Klemm- und/oder Bremskraft auf das Objekt überträgt.
9. Vorrichtung nach Aspekt 8, wobei das mindestens eine Brems- und/oder Klemmelement, vorzugsweise dessen Wand, ausgelegt ist sich aufgrund der ein oder mehreren Klemm- und/oder Bremskräfte und/oder einer Reibungskraft zwischen dem mindestens einen Brems- und/oder Klemmelement und dem Objekt in dem geschlossenen Zustand der Vorrichtung, wenn das Objekt gebremst und/oder geklemmt wird, zu verformen.
10. Vorrichtung nach einem der Aspekte 8 und 9, wobei das mindestens eine Brems- und/oder Klemmelement, vorzugsweise dessen Wand, ausgelegt ist, sich in der Richtung der Mittelachse zu verformen, wobei vorzugsweise eine Ausdehnung des mindestens einen Brems- und/oder Klemmelements zwischen dem ersten Ende und dem zweiten Ende des mindestens einen Brems- und/oder Klemmelements verkürzt und/oder verlängert wird.
11. Vorrichtung nach Aspekt 10, wobei das zweite Ende des mindestens einen Brems- und/oder Klemmelements ausgelegt ist sich in der Richtung der Mittelachse auf das erste Ende des mindestens einen Brems- und/oder Klemmelements zuzubewegen und/oder sich davon wegzubewegen.
12. Vorrichtung nach einem der Aspekte 8 bis 11, wobei das mindestens eine Brems- und/oder Klemmelement ausgelegt ist, sich in der Richtung der Rotation um die Mittelachse zu verformen.
13. Vorrichtung nach Aspekt 12, wobei sich das zweite Ende des mindestens einen Brems- und/oder Klemmelements in der Richtung der Rotation um die Mittelachse um die Mittelachse bewegt.
14. Vorrichtung nach einem der voranstehenden Aspekte, wobei das mindestens eine elastische Element eine, vorzugsweise ringförmige, Federplatte ist.
15. Vorrichtung nach einem der voranstehenden Aspekte, wobei das Gehäuse umfasst:
   einen ersten Gehäuseabschnitt und einen zweiten Gehäuseabschnitt;
   wobei der erste und zweite Gehäuseabschnitt jeweils eine erste Aussparung aufweisen, wobei der erste und der zweite Gehäuseabschnitt so zueinander angeordnet und miteinander verbunden sind, dass die ersten Aussparungen der ersten und zweiten Gehäuseabschnitte einander zugewandt sind und zusammen einen im Gehäuse einseitig offenen ersten Hohlraum bilden,
   wobei das mindestens eine elastische Element, der mindestens eine Druckbeutel und das mindestens eine elastische Dichtungselement in dem ersten Hohlraum angeordnet sind, und
   wobei der erste Gehäuseabschnitt die erste Innenfläche des Gehäuses umfasst.
16. Vorrichtung nach Aspekt 15, wobei das mindestens eine elastische Dichtungselement angrenzend an die erste Innenfläche des Gehäuses und angrenzend an das mindestens eine elastische Element angeordnet ist,
   wobei das mindestens eine elastische Element angrenzend an das mindestens eine elastische Dichtungselement angeordnet ist, sodass das mindestens eine elastische Dichtungselement zwischen dem mindestens einen elastischen Element und der ersten Innenfläche des Gehäuses angeordnet ist, und
   wobei der mindestens eine Druckbeutel angrenzend an das mindestens eine elastische Element angeordnet ist, sodass das mindestens eine elastische Element zwischen dem mindestens einen Druckbeutel und dem mindestens einen elastischen Dichtungselement angeordnet ist.
17. Vorrichtung nach einem der voranstehenden Aspekte, wobei die Vorrichtung ferner umfasst:
   mindestens ein erstes und ein zweites elastisches Element, jeweils aufweisend eine Federkonstante;
   wobei das erste und das zweite elastische Element so zu einander angeordnet sind, dass die elastischen Elemente eine elastische Parallelschaltung bilden, sodass eine Gesamtfederkonstante der parallel geschalteten elastischen Elemente größer ist, als die Federkonstante des ersten elastischen Elements und größer ist als die Federkonstante des zweiten elastischen Elements, und
   wobei der mindestens eine Druckbeutel dergestalt zwischen dem ersten und dem zweiten elastischen Element angeordnet ist, dass durch das Befüllen oder Entleeren des Druckbeutels oder durch Beaufschlagen des Druckbeutels mit dem Fluid unter Überdruck, die Biegung des ersten elastischen Elements und eine Biegung des zweiten elastischen Elements veränderbar ist.
18. Vorrichtung nach Aspekt 17, wobei die Vorrichtung ferner umfasst:
   mindestens ein erstes und ein zweites elastisches Dichtungselement;
   wobei das erste elastische Dichtungselement angrenzend an das erste elastische Element und angrenzend an die erste Innenfläche des Gehäuses angeordnet ist und das zweite elastische Dichtungselement angrenzend an das zweite elastische Element und angrenzend an eine zweite Innenfläche des Gehäuses angeordnet ist, wobei der zweite Gehäuseabschnitt die zweite Innenfläche des Gehäuses umfasst.
19. Vorrichtung nach einem der Aspekte 15 bis 18, wobei das mindestens eine Brems- und/oder Klemmelement derart zu den Gehäuseabschnitten angeordnet ist, dass das mindestens eine Brems- und/oder Klemmelement den ersten einseitig offenen Hohlraum an der offenen Seite begrenzt.
20. System umfassend:
   mindestens eine erste Vorrichtungen nach einem der voranstehenden Aspekte und eine zweite Vorrichtungen nach einem der voranstehenden Aspekte, wobei die Vorrichtungen in einer Richtung quer zu einer Wirkungsrichtung der ersten Brems- und/oder Klemmkraft der ersten Vorrichtung nebeneinander angeordnet sind.
21. System nach Aspekt 20, wobei der erste und der zweite Gehäuseabschnitt der ersten Vorrichtung in einer Richtung quer zu einer Wirkungsrichtung der ersten Brems- und/oder Klemmkraft der ersten Vorrichtung neben dem ersten oder dem zweiten Gehäuseabschnitt der zweiten Vorrichtung angeordnet sind.
22. System nach einem der Aspekte 20 und 21, wobei die erste Vorrichtung und die zweite Vorrichtung derart zueinander angeordnet sind, dass beide Vorrichtungen ausgelegt sind, das gleiche zu bremsende und/oder zu klemmende Objekt zu bremsen und/oder zu klemmen.
23. System nach einem der Aspekte 20 bis 22, wobei die erste Vorrichtung neben und/oder angrenzend an die zweite Vorrichtung angeordnet ist.
24. System nach Aspekt 23, wobei der erste oder der zweite Gehäuseabschnitt der ersten Vorrichtung an den ersten oder den zweiten Gehäuseabschnitt der zweiten Vorrichtung angrenzt.
25. System nach einem der Aspekte 20 bis 24, wobei eine Richtung einer Orientierung der ersten Vorrichtung und eine Richtung einer Orientierung der zweiten Vorrichtung einander gleichen oder entgegengesetzt zu einander verlaufen.
26. System nach einem der Aspekte 20 bis 25, wobei das mindestens eine Brems- und oder Klemmelement der ersten Vorrichtung zugleich das Brems- und/oder Klemmelement der zweiten Vorrichtung ist.
27. System nach einem der Aspekte 20 bis 26, wobei die erste Vorrichtung entlang der Mittelachse neben der zweiten Vorrichtung angeordnet ist.
28. Verwendung einer Vorrichtung nach einem der Aspekte 1 bis 19 oder eines Systems nach einem der Aspekte 20 bis 26 zum Bremsen und/oder zum Klemmen eines zu bremsenden und/oder zu klemmenden Objekts.

In der Beschreibung und in den Figuren sind bevorzugte Ausführungsformen der durch die folgenden Ansprüche beanspruchten Gegenstände beschrieben. Die in der vorstehenden Beschreibung, den Ansprüchen und den Zeichnungen offenbarten optionalen Merkmale können sowohl einzeln als auch in beliebiger Kombination für die Ausführung der hier gemäß der beiliegenden Ansprüche beanspruchten Gegenstände in ihren verschiedenen Ausgestaltungen Verwendung finden.

Die verschiedenen oben beschriebenen Aspekte und Ausführungsformen können kombiniert werden, um noch weitere Ausführungsformen zu schaffen. Diese und andere Änderungen können an den Ausführungsformen im Lichte der obigen detaillierten Beschreibung vorgenommen werden. Im Allgemeinen sollten die in den folgenden Ansprüchen verwendeten Begriffe nicht so ausgelegt werden, dass sie die Ansprüche auf die in der Beschreibung und den Ansprüchen offengelegten spezifischen Aspekte und Ausführungsformen beschränken, sondern so, dass sie alle möglichen Ausführungsformen zusammen mit dem vollen Umfang der Äquivalente, auf die diese Ansprüche Anspruch haben, umfassen.

**BEZUGSZEICHEN**

| | |
|---|---|
| Brems- und/oder Klemmvorrichtung | 101 |
| Gehäuse | 111a, 111b |
| Erster Gehäuseabschnitt | 111a |
| Zweiter Gehäuseabschnitt | 111b |
| Stangenabstreifer | 113a, 113b |
| Erste Innenfläche | 115a, 115b |
| Erster Druckraum | 117a, 117b |
| Zweite Innenfläche | 119b |
| Druckbeutel | 121 |
| Elastisches Element | 131a, 131b |
| Elastisches Dichtungselement | 141, 141a, 141b |
| Verbindung | 123, 144 |
| Verdickte Bereiche | 142, 143 |
| Dünnerer Bereich | 145 |
| Brems- und/oder Klemmelement | 151 |
| Erstes Ende des Brems- und/oder Klemmelements | 152 |
| Zweites Ende des Brems- und/oder Klemmelements | 153 |
| Aussparungen des Brems- und/oder Klemmelements | 156a-d, 158a-b |
| Zufuhr | 171 |
| Fluidzufuhr | 173 |
| System | 201 |
| Mittelachse | M |
| Wirkungsrichtung | W |
| Richtung quer zu der Wirkungsrichtung | R |

## Patentansprüche

1. Brems- und/oder Klemmvorrichtung (101) zum Bremsen und/oder Klemmen eines zu bremsenden und/oder zu klemmenden Objekts, die Vorrichtung (101) umfassend:
ein Gehäuse (111a, 111b);
mindestens ein elastisches Element (131a, 131b);
mindestens ein Druckbeutel (121);
mindestens ein Brems- und/oder Klemmelement (151);
wobei der mindestens eine Druckbeutel (121) geeignet ist, mit einem ersten Fluid befüllt und davon entleert zu werden,
wobei das mindestens eine elastische Element (131a, 131b) derart relativ zu den mindestens einen Druckbeutel (121) angeordnet ist, dass durch das Befüllen oder Entleeren des Druckbeutels (121) oder durch Beaufschlagen des Druckbeutels (121) mit dem Fluid unter Überdruck, eine Biegung des mindestens einen elastischen Elements (131a, 131b) veränderbar ist und dadurch die Vorrichtung (101) zwischen einem geöffneten Zustand, in dem das Objekt von dem Brems- und/oder Klemmelement (151) beabstandet ist, und einem geschlossenen Zustand, in dem das Brems- und/oder Klemmelement (151) eine erste Brems- und/oder Klemmkraft auf das Objekt überträgt, wechselt;
**dadurch gekennzeichnet, dass** die Vorrichtung (101) ferner umfasst:
mindestens ein elastisches Dichtungselement (141, 141a, 141b);
wobei das mindestens eine elastische Dichtungselement (141, 141a, 141b) derart zu dem Gehäuse (111a, 111b) und dem mindestens einen elastischen Element (131a, 131b) angeordnet ist, dass sich zwischen dem mindestens einen elastischen Dichtungselement (141, 141a, 141b) und einer ersten Innenfläche (115a, 115b) des Gehäuses (111a, 111b) ein erster Druckraum (117a, 117b) bildet, welcher erste Druckraum (117a, 117b) mit einem zweiten, über das Gehäuse (111a, 111b) zuführbaren Fluid befüllbar und davon entleerbar ist,
wobei das mindestens eine elastische Dichtungselement (141, 141a, 141b) ausgelegt ist, eine zweite Kraft auf das mindestens eine elastische Element (131a, 131b) auszuüben, wenn der erste Druckraum (117a, 117b) mit dem zweiten Fluid unter Überdruck beaufschlagt wird,
wobei die Vorrichtung (101) ausgelegt ist, zumindest einen Teil der zweiten Kraft als Klemm- und/oder Bremskraft zusätzlich zu der ersten Klemm- und/oder Bremskraft über das Brems- und/oder Klemmelement (151) auf das zu bremsende und/oder zu klemmende Objekt zu übertragen, wenn sich die Vorrichtung (101) in dem geschlossenen Zustand befindet.

2. Vorrichtung (101) nach Anspruch 1, wobei das mindestens eine elastische Dichtungselement (141, 141a, 141b) derart ausgestaltet ist, dass sich das mindestens eine elastische Dichtungselement (141, 141a, 141b) in einem ersten verformten Zustand befindet, wenn der erste Druckraum (117a, 117b) mit dem zweiten Fluid unter Überdruck beaufschlagt ist.

3. Vorrichtung (101) nach einem der voranstehenden Ansprüche, wobei das mindestens eine elastische Element (131a, 131b) ausgelegt ist, den zumindest einen Teil der zweiten Kraft auf das mindestens eine Brems- und/oder Klemmelement (151) zu übertragen,
und/oder
wobei die zweite Kraft derart ausgerichtet ist, dass sie einen Übergang der Vorrichtung (101) von dem offenen in den geschlossenen Zustand, insbesondere durch Unterstützung der Entleerung des Druckbeutels (121), unterstützt.

4. Vorrichtung (101) nach einem der voranstehenden Ansprüche, wobei das mindestens eine elastische Element (131a, 131b) vorzugsweise mit einem Ende lösbar auf dem mindestens einen Brems- und/oder Klemmelement (151) aufliegt.

5. Vorrichtung (101) nach einem der voranstehenden Ansprüche, wobei das mindestens eine Brems- und/oder Klemmelement (151) eine sich von einem ersten Ende (152) in Richtung auf ein zweites vorzugsweise freies Ende (153) erstreckende und eine Mittelachse (M) zumindest teilweise oder vollständig umlaufende Wand aufweist, wobei die Brems- und/oder Klemmkräfte über die Wand auf das Objekt übertragbar sind, wobei das mindestens eine Brems- und/oder Klemmelement (151) vorzugsweise an dessen ersten Ende (152) an dem Gehäuse (111a, 111b) dergestalt, vorzugsweise lösbar, fixiert ist, dass das mindestens eine Brems- und/oder Klemmelement (151) in Richtung der Mittelachse (M) und/oder in Richtung einer Rotation um die Mittelachse (M) fixiert ist.

6. Vorrichtung (101) nach einem der voranstehenden Ansprüche, wobei das mindestens eine Brems- und/oder Klemmelement (151), vorzugsweise dessen Wand, ausgelegt ist verformt zu werden, wenn das mindestens eine Brems- und/oder Klemmelement (151) eine Klemm- und/oder Bremskraft auf das Objekt überträgt.

7. Vorrichtung (101) nach Anspruch 6, wobei das mindestens eine Brems- und/oder Klemmelement (151), vorzugsweise dessen Wand, ausgelegt ist, sich in der Richtung der Mittelachse (M) zu verformen, wobei vorzugsweise eine Ausdehnung des mindestens einen Brems- und/oder Klemmelements (151) zwischen dem ersten Ende (152) und dem zweiten Ende (153) des mindestens einen Brems- und/oder Klemmelements (151) verkürzt und/oder verlängert wird, vorzugsweise wobei das zweite Ende (153) des mindestens einen Brems- und/oder Klemmelements (151) ausgelegt ist sich in der Richtung der Mittelachse (M) auf das erste Ende (152) des mindestens einen Brems- und/oder Klemmelements (151) zuzubewegen und/oder sich davon wegzubewegen.

8. Vorrichtung (101) nach Anspruch 6 oder 7, wobei das mindestens eine Brems- und/oder Klemmelement (151) ausgelegt ist, sich in der Richtung der Rotation um die Mittelachse (M) zu verformen, vorzugsweise wobei sich das zweite Ende (153) des mindestens einen Brems- und/oder Klemmelements (151) in der Richtung der Rotation um die Mittelachse (M) um die Mittelachse (M) bewegt.

9. Vorrichtung (101) nach einem der voranstehenden Ansprüche, wobei das mindestens eine elastische Element (131a, 131b) eine, vorzugsweise ringförmige, Federplatte ist.

10. Vorrichtung (101) nach einem der voranstehenden Ansprüche, wobei das Gehäuse (111a, 111b) umfasst:
einen ersten Gehäuseabschnitt (111a) und einen zweiten Gehäuseabschnitt (111b); wobei der erste und zweite Gehäuseabschnitt (111b) jeweils eine erste Aussparung aufweisen, wobei der erste und der zweite Gehäuseabschnitt (111b) so zueinander angeordnet und miteinander verbunden sind, dass die ersten Aussparungen der ersten und zweiten Gehäuseabschnitte einander zugewandt sind und zusammen einen im Gehäuse (111a, 111b) einseitig offenen ersten Hohlraum bilden,
wobei das mindestens eine elastische Element (131a, 131b), der mindestens eine Druckbeutel (121) und das mindestens eine elastische Dichtungselement (141, 141a, 141b) in dem ersten Hohlraum angeordnet sind, und
wobei der erste Gehäuseabschnitt (111a) die erste Innenfläche (115a, 115b) des Gehäuses (111a, 111b) umfasst.

11. Vorrichtung (101) nach einem der voranstehenden Ansprüche, wobei die Vorrichtung (101) ferner umfasst:
mindestens ein erstes und ein zweites elastisches Element (131a, 131b), jeweils aufweisend eine Federkonstante;
wobei das erste und das zweite elastische Element (131a, 131b) so zu einander angeordnet sind, dass die elastischen Elemente (131a, 131b) eine elastische Parallelschaltung bilden, sodass eine Gesamtfederkonstante der parallel geschalteten elastischen Elemente (131a, 131b) größer ist, als die Federkonstante des ersten elastischen Elements (131a, 131b) und größer ist als die Federkonstante des zweiten elastischen Elements (131a, 131b), und
wobei der mindestens eine Druckbeutel (121) dergestalt zwischen dem ersten und dem zweiten elastischen Element (131a, 131b) angeordnet ist, dass durch das Befüllen oder Entleeren des Druckbeutels (121) oder durch Beaufschlagen des Druckbeutels (121) mit dem Fluid unter Überdruck, die Biegung des ersten elastischen Elements (131a, 131b) und eine Biegung des zweiten elastischen Elements (131a, 131b) veränderbar ist,
und/oder
wobei die Vorrichtung (101) ferner umfasst:
mindestens ein erstes und ein zweites elastisches Dichtungselement (141, 141a, 141b); wobei das erste elastische Dichtungselement (141, 141a, 141b) angrenzend an das erste elastische Element (131a, 131b) und angrenzend an die erste Innenfläche (115a, 115b) des Gehäuses (111a, 111b) angeordnet ist und das zweite elastische Dichtungselement (141, 141a, 141b) angrenzend an das zweite elastische Element (131a, 131b) und angrenzend an eine zweite Innenfläche (119b) des Gehäuses (111a, 111b) angeordnet ist, wobei der zweite Gehäuseabschnitt (111b) die zweite Innenfläche (119b) des Gehäuses (111a, 111b) umfasst.

12. System (201) umfassend:
mindestens eine erste Vorrichtungen nach einem der voranstehenden Ansprüche und eine zweite Vorrichtungen nach einem der voranstehenden Ansprüche, wobei die Vorrichtungen (101) in einer Richtung (R) quer zu einer Wirkungsrichtung (W) der ersten Brems- und/oder Klemmkraft der ersten Vorrichtung nebeneinander angeordnet sind.

13. System (201) nach Anspruch 12, wobei der erste und der zweite Gehäuseabschnitt (111b) der ersten Vorrichtung in einer Richtung (R) quer zu einer Wirkungsrichtung (W) der ersten Brems- und/oder Klemmkraft der ersten Vorrichtung neben dem ersten oder dem zweiten Gehäuseabschnitt (111b) der zweiten Vorrichtung angeordnet sind,
und/oder
wobei die erste Vorrichtung und die zweite Vorrichtung derart zueinander angeordnet sind, dass beide Vorrichtungen (101) ausgelegt sind, das gleiche zu bremsende und/oder zu klemmende Objekt zu bremsen und/oder zu klemmen,
und/oder
wobei eine Richtung einer Orientierung der ersten Vorrichtung und eine Richtung einer Orientierung der zweiten Vorrichtung einander gleichen oder entgegengesetzt zu einander verlaufen.

14. System (201) nach Anspruch 12 oder 13, wobei das mindestens eine Brems- und oder Klemmelement (151) der ersten Vorrichtung zugleich das Brems- und/oder Klemmelement (151) der zweiten Vorrichtung ist.

15. Verwendung einer Vorrichtung (101) nach einem der Ansprüche 1 bis 11 oder eines Systems (201) nach einem der Ansprüche 12 bis 14 zum Bremsen und/oder zum Klemmen eines zu bremsenden und/oder zu klemmenden Objekts.
